# EUROPÄISCHE PATENTANMELDUNG

(11) **EP 1 148 035 A2**
(43) Veröffentlichungstag der Anmeldung: **24.10.2001**
(21) Anmeldenummer: 01108924.0
(22) Anmeldetag: 10.04.2001
(51) Int. Cl.: C03B 19/09, C03B 23/047, C03C 3/06, C03C 11/00

(54) **Verfahren zur Herstellung eines Bauteils aus opakem, synthetischen Quarzglas sowie nach dem Verfahren hergestelltes Quarzglasrohr**

(30) Priorität: 20.04.2000 DE 10019693
(71) Anmelder: Heraeus Quarzglas GmbH & Co. KG, 63450 Hanau (DE)
(72) Erfinder: Gertig, Udo, 63867 Johannesberg (DE); Werdecker, Waltraud, 63456 Hanau (DE); Leist, Johann, 63674 Altenstadt (DE); Leber, Helmut, 63454 Hanau (DE)
(74) Vertreter: Staudt, Armin

(57) **Zusammenfassung**

Die Erfindung betrifft ein Verfahren zur Herstellung eines Bauteils aus opakem, synthetischen Quarzglas und ein nach dem Verfahren hergestelltes Quarzglasrohr. Um die kostengünstige Herstellung von Bauteilen, insbesondere von dünnwandigen Rohren oder Rohrteilen aus opakem Quarzglas hoher chemischer Reinheit und hoher Maßhaltigkeit zu ermöglichen wird erfindungsgemäß vorgeschlagen, ein Ausgangsmaterials bereitzustellen in Form eines Granulats aus synthetischem, hochreinem SiO₂, das aus mindestens teilweise porösen Agglomeraten von SiO₂-Primärteilchen gebildet ist und das eine Stampfdichte von mindestens 0,8 g/cm³ aufweist, das Granulats in eine Form einzubringen und zu einer Vorform aus opakem Quarzglas zu erschmelzen und die Vorform in einem Heißumformprozess unter Bildung des Bauteils aus opakem Quarzglas umzuformen. Ein nach dem Verfahren hergestelltes Quarzglasrohr, das insbesondere zur Verwendung bei der Halbleiterfabrikation geeignet ist, zeichnet sich dadurch aus, dass es aus Quarzglas besteht, das aus einem Granulat aus synthetischem SiO₂ mit einem Lithium-Gehalt von maximal 100 Gew.-ppb hergestellt ist, und dass es eine Wandstärke im Bereich von 0,5 bis 15 mm aufweist.

## Beschreibung

Die Erfindung betrifft ein Verfahren zur Herstellung eines Bauteils aus opakem, synthetischen Quarzglas.

Weiterhin betrifft die Erfindung ein nach dem Verfahren hergestelltes Quarzglasrohr.

Bauteile, wie Rohre, Stäbe, Platten oder Blöcke, aus opakem Quarzglas werden als Halbzeug oder als Fertigteile im Bereich wärmetechnischer Anwendungen eingesetzt, bei denen es auf gute Wärmeisolierung bei gleichzeitig hoher Temperaturstabilität und Temperaturwechselbeständigkeit ankommt. Insbesondere für Anwendungen in der Halbleiterindustrie werden zunehmend höhere Anforderungen an die Reinheit derartiger opaker Quarzglasrohre und Bauteile gestellt. Als Beispiel seien Reaktoren, Diffusionsrohre, Hitzeschilde, Glocken oder Flansche genannt. Für diese Anwendungen ist vorallem eine Opazität im infraroten Spektralbereich erforderlich. Bei Quarzglas geringer Reinheit tragen die darin enthaltenen Verunreinigungen zur Opazität bei. Demgegenüber wird bei Einsatz reiner Ausgangsstoffe transparentes Quarzglas erhalten, so dass die Opazität der Formkörper durch künstlich eingebrachte Poren erzeugt werden muss.

Besonders problematisch ist die Herstellung dünnwandiger Rohre oder Rohrabschnitte aus opakem Quarzglas durch Umformen eines opaken Rohlings in einem Heißumformverfahren. Denn derartige Rohre oder Rohrabschnitte werden wegen ihrer geringen Wandstärke durch das Erhitzen beim Heißumformen leicht transparent, insbesondere dann, wenn sie hochreinen Ausgangsstoffen hergestellt sind. Die Herstellung von Bauteile, insbesondere von dünnwandigen Rohren aus opakem, aus reinen Ausgangsstoffen hergestellten Quarzglas ist Gegenstand dieser Erfindung.

Ein Verfahren zur Herstellung von opakem Quarzglas aus reinen Ausgangsstoffen ist in der EP-A1 816 297 beschrieben. Darin wird vorgeschlagen, die Opazität des Quarzglases zu erzeugen, indem ein Pulvergemisch aus synthetisch hergestellten SiO₂-Partikeln mit einer mittleren Partikelgröße von 300 µm und einem Zusatzmittel in Form von Siliziumnitrid-Pulver hergestellt und erschmolzen wird. Beim Schmelzen der Pulvermischung werden durch thermische Zersetzung des Si₃N₄-Pulvers gasförmige Komponenten, wie Stickstoff, freigesetzt. Die gasförmigen Komponenten führen zu Porenbildung im erweichten Quarzglas und erzeugen so die gewünschte Opazität des Formkörpers. Zur Herstellung des Formkörpers wird die Pulvermischung in einer mit Graphitfilz ausgekleideten Graphitform gefüllt und in einem elektrisch beheizten Ofen bei einer Temperatur von 1800 °C unter Vakuum erhitzt. Beim Schmelzen wandert die Front des sich erweichenden und schmelzenden Quarzglases als _{"}Schmelzfront" von der Formwandung aus radial nach innen.

Durch Verunreinigungen können Entglasungen des Quarzglases entstehen, die zu Sprödigkeit und verminderter Temperaturwechselbeständigkeit führen. Auch Reste des Zusatzmittels können die Qualität des Quarzglases in dieser Hinsicht beeinträchtigen. Schädlich ist auch eine inhomogene Porenverteilung. Während des Verglasens kann ein Porenwachstum auftreten, bei dem größere Poren auf Kosten Kleinerer wachsen. Große Poren tragen jedoch nur wenig zur Opazität bei, führen zu eine geringen Dichte des opaken Quarzglases und mindern die mechanische Festigkeit und die Standzeit des Quarzglas-Formkörpers.

Die Herstellung von Quarzglasrohren aus derartigen Formkörpern ist aufwendig, insbesondere dann, wenn eine hohe Maßhaltigkeit verlangt wird. Im allgemeinen ist für ein Anschmelzen eines anderen Bauteils an ein Quarzglasrohr eine hohe Maßhaltigkeit in der Wandstärke erforderlich.

Der Erfindung liegt die Aufgabe zugrunde, ein Verfahren anzugeben, das eine kostengünstige Herstellung von Bauteilen, insbesondere von dünnwandigen Rohren oder Rohrteilen aus opakem Quarzglas hoher chemischer Reinheit und hoher Maßhaltigkeit ermöglicht.

Weiterhin liegt der Erfindung die Aufgabe zugrunde, ein nach dem Verfahren hergestelltes, Quarzglasrohr bereitzustellen, das insbesondere zur Verwendung bei der Halbleiterfabrikation geeignet ist.

Hinsichtlich der Herstellung von Bauteilen aus opakem Quarzglas wird diese Aufgabe durch ein Verfahren gelöst, das folgende Verfahrensschritte umfasst:
(a) Bereitstellen eines Ausgangsmaterials in Form eines Granulats aus synthetischem, hochreinem SiO₂, das aus mindestens teilweise porösen Agglomeraten von SiO₂-Primärteilchen gebildet ist und das eine Stampfdichte von mindestens 0,8 g/cm³ aufweist,
(b) Einbringen des Granulats in eine Form und Erschmelzen einer Vorform aus opakem Quarzglas,
(c) Umformen der Vorform in einem Heißumformprozess unter Bildung des Bauteils aus opakem Quarzglas.

Das erfindungsgemäße Verfahren umfasst mindestens zwei Behandlungsschritte, die hohe Temperaturen erfordern (im folgenden als _{"}Heißbehandlungsschritt" oder als _{"}Heißumformprozess" bezeichnet) . Beim Verfahrensschritt (b) wird das Ausgangsmaterial, und beim Verfahrensschritt (c) die daraus hergestellte Vorform einer Hochtemperaturbehandlung unterworfen. Das erfindungsgemäße Verfahren zeichnet sich dadurch aus, dass trotz des Einsatzes hochreiner Ausgangsstoffe auch nach diesen mehrfachen Heißbehandlungsschritten noch ein opakes Bauteil aus reinem Quarzglas erhalten werden kann. Der zweite Heißumformprozess bietet eine kostengünstige Möglichkeit, die vorgegebenen Endabmessungen des opaken Bauteils mit hoher Maßhaltigkeit einzustellen. Bei einem rohrförmigen Bauteil betrifft dies insbesondere die Wandstärke sowie Außen- und Innendurchmesser, und bei einem stabförmigen Bauteil den Außendurchmesser.

Eine wesentliche Voraussetzung dafür besteht darin, dass ein Ausgangsmaterial gemäß obigem Verfahrensschritt (a) in Form von Granulat aus synthetischem, hochreinem SiO₂ eingesetzt wird. Bei einem im Sinne der Erfindung hochreinen SiO₂ beträgt die Gesamtheit der Verunreinigungen an Li, Na, K, Mg, Ca, Fe, Cu, Cr, Mn, Ti, und Zr insgesamt weniger als 1 Gew.-ppm. Dotierstoffe sind keine Verunreinigungen in diesem Sinn.

Das Granulat ist aus mindestens teilweise porösen Agglomeraten von SiO₂-Primärteilchen gebildet und es weist eine Stampfdichte von mindestens 0,8 g/cm³ auf. Derartige Primärteilchen werden beispielsweise durch Flammenhydrolyse oder Oxidation von Siliziumverbindungen, durch Hydrolyse organischer Siliziumverbindungen nach dem sogenannten Sol-Gel-Verfahren oder durch Hydrolyse anorganischer Siliziumverbindungen in einer Flüssigkeit erhalten. Zwar zeichnen sich derartige Primärteilchen durch hohe Reinheit aus; sie lassen sich wegen ihrer geringen Schüttdichte aber nur schwer handhaben. Zu diesem Zweck ist eine Verdichtung mittels Granulierverfahren gebräuchlich. Beim Granulieren bilden sich durch Zusammenlagerungen der feinteiligen Primärteilchen Agglomerate mit größerem Durchmesser. Für den Erfolg der erfindungsgemäßen Lehre ist es entscheidend, dass beim Erschmelzen des eingesetzten Granulats Gase eingeschlossen werden. Hierzu ist eine gewisse Porosität erforderlich, die in den einzelnen Agglomeraten als offener oder geschlossener Porenraum angelegt sein kann. Beim Erschmelzen der Vorform schließt sich der größte Teil des Porenraums durch Sintern und Kollabieren. Von vorher offenen Porenkanälen bleibt jedoch eine Vielzahl feiner, geschlossener Poren, an denen IR-Strahlung rückgestreut wird, was eine hohe Opazität auch im IR-Bereich erzeugt. Die erforderliche Porosität des Quarzglases kann sich auch beim Einsatz von Granulat aus Agglomeraten ergeben, die eine zerklüftete, mit Vertiefungen versehende Oberflächenstruktur aufweisen. Beim Erschmelzen bilden die Vertiefungen einen Porenraum, der zu einem Gaseinschluss und damit zu geschlossenen Poren in der Vorform führen kann. An den feinen, geschlossenen Poren wird einfallendes Licht gestreut, was Opazität erzeugt.

Eine Zugabe eines beim Verglasen volatilen Zusatzstoffes zur Erzeugung der Opazität - wie beim eingangs beschriebenen, bekannten Verfahren - ist daher nicht notwendig, so dass - falls erforderlich - die mit dem Einsatz eines derartigen Zusatzstoffes einhergehenden Verunreinigungen des Quarzglases vermieden werden können.

Die Stampfdichte von mindestens 0,8 g/cm³ ermöglicht das Einbringen des SiO₂-Granulats in die Form zur Bildung der Vorform und sie ist ein Maß für die einzustellende Porosität des Granulats. Die Stampfdichte wird nach DIN/ISO 787 Teil 11 ermittelt.

Weitere Details zur Herstellung sowie zu chemischen und physikalischen Eigenschaften eines im Sinne dieser Erfindung geeigneten Granulats werden weiter unten noch näher erläutert.

Aus dem Granulat wird eine Vorform aus opakem Quarzglas erschmolzen. Hierzu wird das Granulat in eine Form eingebracht und darin erhitzt und erschmolzen. Das Einbringen des Granulats kann vor oder während des Erschmelzens erfolgen. Wesentlich ist, dass eine Vorform aus opakem, synthetischen Quarzglas erhalten wird. Die Vorform weist im allgemeinen Zylinderform auf, wobei eine Abweichung davon -etwa in Richtung einer Kugel- oder Kegelform - für den technischen Erfolg der erfindungsgemäßen Lehre nicht relevant ist. Bevor die Vorform vollständig erschmolzen ist, liegt mindestens ein Teil davon als Schüttung oder Schicht aus dem Granulat vor. Der Einfachheit halber wird auch dieser Zwischenzustand als _{"}Vorform" bezeichnet.

Nach etwaigen Nachbehandlungsschritten, wie etwa einer Reinigung oder Glättung der Außenoberfläche der Vorform wird diese einem Heißumformprozess unterworfen, in welchem das gewünschte Bauteil aus opakem Quarzglas mit hoher Maßhaltigkeit erhalten wird. Bei dem Heißumformprozess handelt es sich beispielsweise um ein Ziehverfahren, oder um eine Umformung der erweichten Vorform unter Einsatz einer anderen Form, eines Werkzeugs oder der Schwerkraft. Dabei werden zum Beispiel Rohre, Stäbe, Blöcke oder Platten erhalten. Der Vorgang des Umformens der Vorform zu dem Bauteil kann auch in mehreren Verfahrensstufen erfolgen. Wesentlich ist, dass die aus einem ersten Heißbehandlungsschritt erhaltene Vorform durch mindestens einen weiteren Heißbehandlungsschritt zu einem Bauteil aus opakem Quarzglas verarbeitet werden kann. Erst in diesem weiteren Heißbehandlungsschritt erhält das Bauteil seine vorgegebenen Endabmessungen. Diese lassen sich dabei mit hoher Maßhaltigkeit einstellen.

Das erfindungsgemäße Verfahren hat sich besonders für die Herstellung von Bauteilen in Form von Rohren oder Rohrteilen aus opakem Quarzglas bewährt. Zu diesem Zweck wird die Außenoberfläche der Vorform nach deren Entnahme aus der Form mechanisch bearbeitet und die Vorform wird anschließend einer Erhitzungszone zugeführt, in welcher sie von einem Ende beginnend zonenweise erweicht und dabei durch Strecken und Aufblasen zu dem opaken Quarzglasrohr umgeformt wird. Besonders geeignet ist das Verfahren für die Herstellung dünnwandiger Rohre mit geringen Wandstärke- und Durchmessertoleranzen. Die Wandstärken derartiger Rohre oder Rohrteile liegt im Bereich zwischen 0,5 mm und 15 mm.

Bei dieser Verfahrensweise wird die Vorform neben dem Heißbehandlungsschritt, bei welchem die Vorform aus dem Granulat erschmolzen wird, mindestens einem weiteren Heißbehandlungsschritt unterworfen, in dem sie erweicht, gestreckt und zu dem (dünnwandigen) opaken Quarzglasrohr aufgeblasen wird. Eine Besonderheit dieses Verfahrens liegt darin, dass trotz des Einsatzes hochreiner Ausgangsstoffe auch nach diesen mehrfachen Heißbehandlungsschritt noch ein opakes, insbesondere dünnwandiges, Quarzglasrohr erhalten werden kann, wobei erst durch den weiteren Heißbehandlungsschritt oder die weiteren Heißbehandlungsschritt das Quarzglasrohr seine Endabmessungen mit hoher Maßhaltigkeit erhält.

Eine wesentliche Voraussetzung dafür besteht darin, dass für die Herstellung der Vorform ein Ausgangsmaterial gemäß obigem Verfahrensschritt (a) in Form von Granulat aus synthetischem, hochreinem SiO₂ eingesetzt wird, wie dies oben bereits erläutert worden ist.

Nach der Entnahme der Vorform aus der Form wird mindestens ein Teil von deren Außenoberfläche - bei einer zylinderförmigen Vorform zum Beispiel die Zylindermantelfläche - mechanisch bearbeitet. Dabei wird die Außenoberfläche von lose anhaftendem Material gesäubert und geglättet. Eine möglichst glatte Außenoberfläche führt bei den nachfolgenden Verfahrensschritten zu einer qualitativ höherwertigen Oberfläche.

Die so vorbehandelte Vorform wird einer Erhitzungszone zugeführt und darin von einem Ende beginnend zonenweise erweicht. Dabei wird sie durch Strecken und Aufblasen zu einem dünnwandigen Quarzglasrohr aus opakem, synthetischen Quarzglas umgeformt. Der Vorgang des Streckens und Aufblasens kann auch in mehreren Verfahrensstufen erfolgen. Wesentlich ist, dass aus einer in einem ersten Heißumformprozess erhaltene Vorform durch mindestens einen weiteren Heißumformprozess zu einem, opaken Quarzglasrohr hoher Maßhaltigkeit verarbeitet werden kann. Das erfindungsgemäße Verfahren ermöglicht erstmals die kostengünstige Herstellung opaker Quarzglasrohre hoher Reinheit aus synthetischem Ausgangsmaterial, die im Einzelfall dünnwandig ausgebildet sind.

Unter einem dünnwandigen Quarzglasrohr wird im Sinne dieser Erfindung ein solches mit einer Wandstärke von etwa 15 mm oder weniger verstanden. Aus einem derartigen dünnwandigen, opaken Quarzglasrohr werden zum Beispiel Bauteile für die Behandlung von hochreinem Halbleitermaterial gefertigt.

Ausgangsmaterial in Form eines Granulats mit einer Stampfdichte im Bereich von 0,9 g/cm³ bis 1,4 g/cm³ hat sich im Hinblick auf die Rieselfähigkeit und Handhabbarkeit besonders bewährt und es werden damit gute Ergebnisse hinsichtlich der Opazität des Quarzglases - insbesondere im infraroten Spektralbereich erreicht.

Neben der Stampfdichte ist die spezifische Oberfläche des Granulats ein weiteres Maß für die einzustellende Porosität des Granulats bzw. der Agglomerate. Als besonders geeignet für den Einsatz beim erfindungsgemäßen Verfahren hat sich ein SiO₂-Granulat erwiesen, bei dem die spezifische Oberfläche (nach BET) im Bereich zwischen 1 und 40 m²/g, vorzugsweise auf einen Wert im Bereich zwischen 10 und 30 m²/g, eingestellt wird. Diese spezifische Oberfläche (nach BET) des Granulats ergibt sich aufgrund des großen Porenraums. Diese tritt somit nicht primär als Außenoberfläche, sondern überwiegend als Innenoberfläche in Form von Porenkanälen in Erscheinung. In Verbindung mit dem Porenraum begünstigt die große Oberfläche die Bildung von gasförmigem Siliziummonoxid (SiO) beim Verglasen, was einem Kollabieren kleiner Poren entgegenwirkt, da in geschlossenen Poren eingeschlossene Gase nicht mehr entweichen können. Dadurch wird ein opakes, reines Quarzglas erhalten, das eine homogene Porenverteilung bei gleichzeitig hoher Dichte, eine ausreichend hohe Viskosität und eine geringe Entglasungsneigung aufweist. Das aus dem opaken Quarzglas hergestellte Quarzglasrohr zeichnet sich durch gute Wärmeisolierung und eine lange Standzeit bei hoher Temperatur aus.

Eine weitere thermische Stabilisierung wird - insbesondere bei dünnwandigen Rohren - dadurch erreicht, dass auf die Außenoberfläche der Vorform vor einem nachfolgenden Heißumformprozess eine ein Kristallisations induzierende Komponente aufgebracht wird. Dabei begünstigt eine offenporige Außenoberfläche das Eindringen der Komponenten und ihre Fixierung. Besonders bewährt hat sich das Aufsprühen einer flüssigen aluminiumhaltigen Komponente wie Aluminiumnitrat oder Aluminiumhexahydrat. Im nachfolgenden Heißumformprozess bilden sich daraus Kristallisationskeime, wobei die Fixierung in der offenporigen Außenoberfläche ein schnelles Wachstum der Kristallisationszone begünstigt. Die Kristallisationszone wirkt thermisch stabilisierend, wobei eine derartige Stabilisierungsschicht beim Einsatz der Bauteile bei hohen Temperaturen das sogenannte _{"}Sagging" zu Prozessbeginn effektiv verhindert und damit deren Standzeit erhöht. Dies betrifft insbesondere dünnwandige Bauteile.

Die spezifische Oberfläche des SiO₂-Granulats wird nach dem BET-Verfahren (DIN 66132) ermittelt.

In einer bevorzugten Verfahrensvariante liegen die SiO₂-Primärteilchen mit einer mittleren Teilchengröße im Bereich von 0,5 µm und 5 µm oder mit einer mittleren Teilchengröße unterhalb von 0,2 µm vor. Die erstgenannten Teilchengrößen werden erhalten, wenn die Primärteilchen nach dem sogenannten _{"}Sol-Gel-Verfahren" durch Hydrolyse organischer Siliziumverbindungen hergestellt werden. Teilchengrößen unterhalb von 0,2 µm liegen bei pyrogenen Primärteilchen vor, die durch Flammenhydrolyse oder Oxidation anorganischer Siliziumverbindungen gebildet werden. Es können auch Mischungen der genannten Primärteilchen-Typen hergestellt und eingesetzt werden. Auch Primärteilchen aus Fällungskieselsäuren sind für die Granulatherstellung geeignet. Die amorphe Ausbildung der Primärteilchen trägt zu einer geringen Entglasungsneigung beim Verglasen bei.

Bei beiden Verfahrensvarianten zeichnen sich die Primärteilchen durch eine große freie Oberfläche aus. Durch Agglomeration einer Vielzahl derartiger Primärteilchen aufgrund physikalischer oder chemischer Bindungskräfte werden die Granulate im Sinne der Erfindung gebildet. Für die Granulation werden die bekannten Granulierverfahren eingesetzt, insbesondere die Aufbaugranulation (Nassgranulierverfahren), die Sprühtrocknung oder Pressgranulation (Extrusion) einer die Primärteilchen enthaltenden Suspension oder Masse. Insbesondere die nach dem Sol-Gel-Verfahren hergestellten Primärteilchen liegen im Granulat in dichter Packung vor, da diese überwiegend und auch vorzugsweise sphärische Form haben. Die freie Oberfläche wird um die Kontaktflächen aneinandergrenzender Primärteilchen verringert; jedoch können sich zwischen den einzelnen Primärteilchen - wie oben erläutert - beim Verglasen geschlossene Poren ausbilden. Dadurch, dass die Primärteilchen eine mittlere Teilchengröße von weniger als 5 µm haben, ergibt sich eine entsprechend feine Porenverteilung. Die mittlere Teilchengröße wird als sogenannter D₅₀-Wert nach ASTM C1070 ermittelt.

Vorteilhafterweise wird ein Granulat eingesetzt, bei dem die einzelnen SiO₂-Körner eine inhomogene Dichteverteilung aufweisen, wobei ein Innenbereich geringerer Dichte mindestens teilweise von einem Außenbereich höherer Dichte umschlossen ist. Dadurch gelingt es Gase im Innenbereich einzuschließen, die dann während des Verglasens nicht oder nur zum Teil entweichen und so zu Porenbildung und Opazität des Quarzglases beitragen. Der Innenbereich geringerer Dichte ist zum Beispiel vorteilhaft als Hohlraum ausgebildet, der von dem Außenbereich höherer Dichte wenigstens teilweise nach außen abgeschlossen ist.

Alternativ oder ergänzend dazu weisen die Agglomerate vorteilhafterweise eine mit Vertiefungen versehene Außenoberfläche auf. Eine derartig strukturierte, zerklüftete Außenoberfläche trägt zum Einschluss von Gasen und zur Porenbildung beim Erschmelzen der Vorform bei. Eine derartige Oberfläche kann bei einer Herstellung von Granulat durch Extrudieren erhalten werden. Für den Einsatz bei dem erfindungsgemäßen Verfahren haben sich Granulate in Form eines Aufbaugranulats, eines Sprühgranulats oder eines Extrudats bewährt.

Als günstig hat es sich erwiesen, ein Granulat einzusetzen, bei dem die Agglomerate durch thermische Behandlung bei einer Temperatur im Bereich von 800 °C bis 1350 °C vorverdichtet sind. Durch die thermische Behandlung werden die Stampfdichte und die spezifische Oberfläche auf den oben genannten bevorzugen Werte eingestellt. Der Außenbereich kann dabei eine Dichte erhalten, die höher ist als die des porösen oder hohlen Innenbereichs, so dass sich Poren und Porenkanäle bevorzugt im Außenbereich verringern und schließen. Hierzu wird die thermische Behandlung beendet oder unterbrochen, bevor der sich anfänglich einstellende Temperaturgradient zwischen Außenbereich und Innenbereich ausgeglichen ist und zu einer vollständigen Verdichtung geführt hat. Dies lässt sich beispielsweise auf einfache Weise dadurch realisieren, dass das Granulat im Durchlauf durch eine Heizzone geführt wird. Indem die thermische Behandlung in chlorhaltiger Atmosphäre durchgeführt wird, werden Verunreinigungen, die bei der Behandlungstemperatur flüchtige Chlorverbindungen bilden, und OH-Gruppen entfernt. Dadurch wird die Reinheit des Granulats verbessert und gleichzeitig wird die Viskosität des daraus hergestellten Quarzglases erhöht und die Entglasungsneigung wird weiter gesenkt. Die chlorhaltige Atmosphäre enthält Chlor und/oder eine Chlorverbindung.

Besonders bewährt hat sich ein Einsatz von SiO₂-Granulat aus Agglomeraten mit einer mittleren Größe im Bereich von 100 µm bis 4000 µm. Dabei kann es vorteilhaft sein, den Feinanteil von Agglomeraten mit einer Korngröße unterhalb von 100 µm zu vermeiden. Hierzu werden Körner mit einer Korngröße unterhalb von 100 µm aus dem Granulat entfernt, oder ihre Bildung wird bereits bei der Herstellung des Granulats unterdrückt. In einem gröberen Granulat-Korn bildet sich während des Erschmelzens der Vorform oder bei einer thermischen Behandlung zur Vorverdichtung des Granulats leichter ein Temperaturgradient aus, der zu einem Dichtegradienten innerhalb des Korns mit höherer Verdichtung im Außenbereich führt und damit die Porenbildung beim Erschmelzen begünstigt, wie oben erläutert. Die geringe Größe feiner Agglomerat-Körner erschwert oder verhindert hingegen die Ausbildung eines derartigen Dichtegradienten, so dass der Feinanteil zur Porenbildung nicht beträgt.

Bei Einsatz eines Granulats, das im Bereich zwischen 5 Gew.-ppm und 20 Gew.-ppm mit Aluminium dotiert sind, wird eine höhere Viskosität des daraus hergestellten Quarzglasrohres erreicht. Eine Aluminiumdotierung durch feinverteilte, nanoskalige Al₂O₃-Partikel bewirkt eine homogene Verteilung des Dotierstoffs, wobei für diesen Zwecke pyrogen hergestellte Al₂O₃-Partikel aufgrund ihrer hohen spezifischen Oberfläche besonders gut geeignet sind. Das Einbringen der Aluminiumdotierung kann auch über eine aluminiumhaltige Flüssigkeit (Lösung) erfolgen, zum Beispiel als Aluminiumnitrat- oder Aluminiumchlorat-Lösung.

Vorteilhafterweise erfolgt das Erschmelzen der Vorform aus dem opaken Quarzglas mittels eines Lichtbogens, wobei eine Verglasungsfront von einer Innenoberfläche der Vorform nach außen fortschreitet. Bei einer hohlzylindrischen Vorform handelt es sich bei der Innenoberfläche um die Innenwandung der Bohrung. Bei der Verglasungsfront handelt es sich um einen unscharfen Grenzbereich zwischen geschmolzenem und angeschmolzenen Material. Im angeschmolzenen Material liegen offene Poren und Kanäle vor, während das geschmolzenen Material geschlossene Poren aufweist, die nicht mehr mit der Außenoberfläche verbunden sind. Die Vorform wird von der Innenoberfläche aus erhitzt, so dass die Verglasungsfront von dort durch die Wandung der Vorform nach außen wandert. Sublimierbare Verunreinigungen werden dabei in die Gasphase überführt und vor der Verglasungsfront nach außen, in Richtung noch poröser Bereiche der Vorform getrieben, wo sie entweichen oder abgesaugt werden können.

Dabei hat es sich als günstig erweisen, die Vorform unter Rotation um die Rotationsachse von der Innenoberfläche aus mittels eines Lichtbogens auf eine Verglasungstemperatur oberhalb von 1900 °C zu erhitzen. Die Rotation gewährleistet ein gleichmäßiges Erhitzen der Vorform, Temperaturspitzen und Dichteunterschiede werden so vermieden. Beim Erhitzen in einem Lichtbogen wird die Vorform besonders hohen Temperaturen oberhalb von 1900 °C ausgesetzt. Infolge der hohen Temperaturen laufen Diffusions- und andere Stoffaustauschvorgänge beschleunigt ab. Verunreinigungen, insbesondere gasförmige Verunreinigungen, lassen sich dadurch wirkungsvoll durch Sublimation und Absaugung beseitigen.

Es wird eine Verfahrensweise bevorzugt, bei der die Vorform in einem Horizontalziehverfahren zu einem Quarzglasrohr umgeformt wird. Beim Horizontalziehverfahren wird die Vorform in Form eines Hohlzylinders eingesetzt, die in horizontaler Ausrichtung unter Rotation um ihre Längsachse kontinuierlich einer Erhitzungszone zugeführt und darin unter Innenüberdruck gegen ein Formwerkzeug geblasen und kontinuierlich abgezogen wird. Dieses Verfahren ist besonders für die Herstellung von opaken Quarzglasrohren mit Wandstärken zwischen 0,5 mm und 15 mm geeignet. Die Wandstärken richten sich teilweise auch nach der bei gegebenem Rohrdurchmesser erforderlichen mechanischen und thermischen Stabilität und den Einsatzbedingungen. Beispielsweise liegt bei einem Rohr mit einem Durchmesser von 250 mm die Wandstärke üblicherweise zwischen 5 mm und 8 mm.

In einer alternativen, jedoch gleichermaßen bevorzugten Verfahrensvariante wird die Vorform in einem Vertikalziehverfahren zu einem Quarzglasrohr umgeformt. Auch bei diesem Verfahren wird als Vorform ein Hohlzylinder eingesetzt. Diese wird in vertikaler Ausrichtung ihrer Längsachse kontinuierlich einer Erhitzungszone zugeführt, darin erweicht und in der Regel werkzeugfrei zu einem dünnwandigen Quarzglasrohr abgezogen. Dieses Verfahren wird vorzugsweise für die Herstellung von Quarzglasrohren mit einem Außendurchmesser bis zu 50 mm und einer Wandstärke von weniger als 4 mm eingesetzt.

Hinsichtlich des rohrförmigen Bauteils aus opakem Quarzglas wird die oben angegebene technische Aufgabe dadurch gelöst, dass es aus synthetischem SiO₂ mit einem Lithium-Gehalt von maximal 100 Gew.-ppb besteht, und dass es eine Wandstärke im Bereich von 0,5 mm bis 15 mm aufweist.

Das erfindungsgemäße Bauteil zeigt folgende Merkmale:
(a) es besteht aus synthetischem Quarzglas, das sich allgemein durch hohe Reinheit und im besonderen durch einen geringen Lithium-Gehalt von 100 Gew.-ppb oder weniger auszeichnet
(b) es ist dünnwandig mit einer Wandstärke im Bereich von 0,5 bis 15 mm ausgebildet, und
(c) es besteht aus opakem Quarzglas.

Die Merkmale (a) und (b) erschweren bei Quarzglas die Erhaltung des Merkmals (c), also der gewünschten Opazität. Die Herstellung derartig dünnwandiger Quarzglasrohre aus opakem, hochreinen Quarzglas wird durch das erfindungsgemäße Verfahren erstmals ermöglicht.

Die Quarzglasrohre gemäß der Erfindung sind aufgrund ihrer Reinheit und Opazität insbesondere für wärmetechnische Anwendungen auf dem Gebiet der Halbleiterherstellung geeignet. Durch feinteilige Porenverteilung wird beim bestimmungsgemäßen Einsatz des Bauteils eine besonders hohe Wärmeisolierung erreicht. Lokale Temperaturspitzen auf der einen Seite des opaken Bauteils werden durch die Opazität des Quarzglases geglättet, so dass auf der anderen Seite ein homogeneres Temperaturprofil erzeugt wird. Dünnwandige Quarzglasrohre werden dabei zum Beispiel dort eingesetzt, wo es auf geringes Gewicht bei gleichzeitig hoher Opazität ankommt. Nach dem erfindungsgemäßen Verfahren hergestellte Quarzglasrohre werden aus einer in einem ersten Heißumformprozess erzeugten Vorform durch mindestens einen weiteren Heißumformprozess erhalten, wobei erst der weitere Heißumformprozess die kostengünstige Herstellung opaker Quarzglasrohre hoher Reinheit aus synthetischem Ausgangsmaterial und hoher Maßhaltigkeit ermöglicht. Aufgrund ihrer hohen Maßhaltigkeit lassen sich andere, insbesondere transparente Quarzglasrohre, passgenau anschmelzen.

Eine weitere Verbesserung ergibt sich dadurch, dass das Quarzglas einen Natrium-Gehalt von weniger als 200 Gew.-ppb, bevorzugt weniger als 60 Gew.-ppb, und einen Kalium-Gehalt von weniger als 200 Gew.-ppb, bevorzugt weniger als 50 Gew.-ppb, aufweist. Aufgrund des geringen Gehalts an Alkali-Verunreinigungen weist ein derartiges Quarzglas auch eine vergleichsweise hohe Viskosität auf. Dabei liegt insbesondere der Verunreinigungsgehalt an Lithium typischerweise unterhalb von 10 Gew.-ppb liegen.

Besonders bevorzugt für einen Einsatz im Bereich der Halbleiterherstellung und in Heißprozessen ist ein Bauteil, das eine Wandstärke im Bereich von 4 bis 8 mm aufweist.

Für einen Einsatz bei hohen Temperaturen ist ein Quarzglasrohr besonders geeignet, das mit einer Stabilisierungsschicht versehen ist. Die Stabilisierungsschicht wird durch erzeugt, indem vor einem nachfolgenden Heißumformprozess auf die Außenoberfläche der Vorform eine kristallisationsinduzierende Komponente aufgebracht wird, wie dies oben anhand der Beschreibung des erfindungsgemäßen Verfahrens näher erläutert ist. Dadurch wird au der Außenoberfläche eine Stabilisierungsschicht in Form einer thermisch stabilisierenden Kristallisationszone erzeugt, die beim Einsatz des Bauteils bei hohen Temperaturen das sogenannte _{"}Sagging" vermindert.

Nachfolgend wird die Erfindung anhand von Ausführungsbeispielen und einer Zeichnung näher erläutert. In der Zeichnung zeigen in schematische Darstellung im einzelnen:
- **Figur 1**: den Verfahrensschritt des Verglasens (Erschmelzens) von Granulat mittels eines Lichtbogens unter Bildung eines Hohlzylinders,
- **Figur 2**: die Herstellung eines Quarzglasrohres durch Strecken und Aufbasen eines Quarzglaszylinders in einem Horizontalziehverfahren,
- **Figur 3**: eine erste Ausführungsform des erfindungsgemäßen SiO₂-Granulats anhand eines Querschnitts durch ein einzelnes SiO₂-Korn,
- **Figur 4**: eine zweite Ausführungsform des erfindungsgemäßen SiO₂-Granulats in Form von Sprühgranulat anhand eines Querschnitts durch ein Sprühkorn,
- **Figur 5**: eine dritte Ausführungsform des erfindungsgemäßen SiO₂-Granulats in Form eines Extrudats anhand einer dreidimensionalen Ansicht, und
- **Figur 6**: einen Querschnitt einer weitere Ausführungsform des erfindungsgemäßen SiO₂-Granulats in Form eines Extrudats.

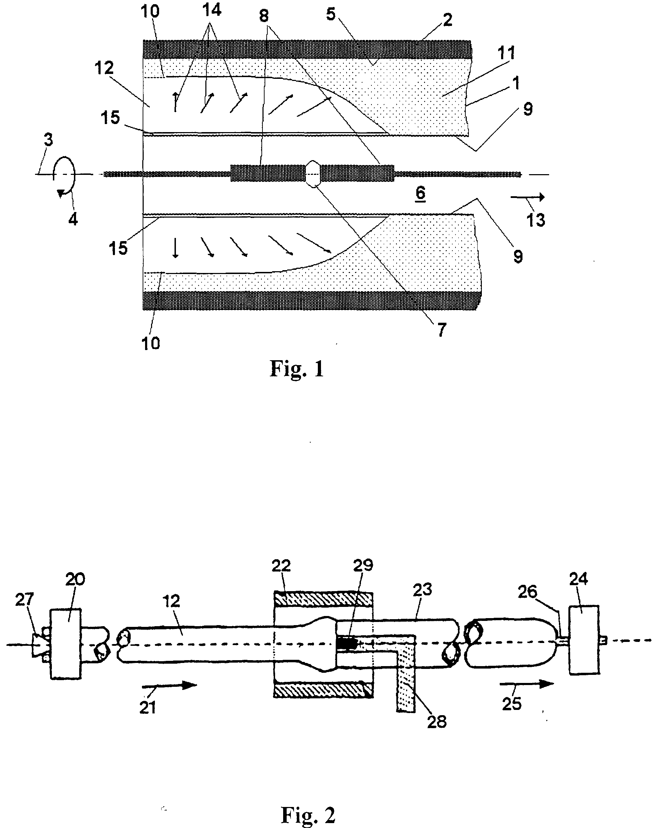

In **Figur 1** ist schematisch das erfindungsgemäße Verfahren zur Herstellung eines Hohlzylinders 12 aus opakem Quarzglas durch Verglasen eines zunächst porösen Formkörpers 1 dargestellt. Im folgenden wird zunächst die Herstellung des Formkörpers 1 näher erläutert:

Es wird ein SiO₂-Granulat aus synthetisch hergestelltem SiO₂ durch ein Nassgranulierverfahren hergestellt. Zur Reinigung des Granulats wird dieses in einem Cl₂/HCl-Gasgemisch behandelt. In dem gereinigten Granulat werden folgende Verunreinigungsgehalte gemessen (in Gew.-ppb): Lithium: <10, Natrium: 40, Kalium: 36, Eisen: 30. Durch thermische Verdichtung bei einer Temperatur von 1200 °C im Drehrohrofen wird bei dem Granulat eine spezifische BET-Oberfläche von 34 m²/g und einer Stampfdichte von 1,1 g/cm³ eingestellt.

Das Granulat wird in eine rohrförmige Metallform 2 eingefüllt, die um ihre Längsachse 3 rotiert. Die Rotationsrichtung ist in Figur 1 mit dem Richtungspfeil 4 gekennzeichnet. Unter der Wirkung der Zentrifugalkraft und Zuhilfenahme einer Schablone wird aus der Schüttung an der Innenwandung 5 der Metallform 2 ein rotationssymmetrischer Formkörper 1 geformt. Der Formkörper 1 hat in der Schüttung eine Schichtdicke von ca. 100 mm und eine Innenbohrung 5 in Form einer Durchgangsbohrung 6 mit einem Innendurchmesser von etwa 75 mm. Durch die Zentrifugalkraft wird die Schüttung vor Durchführung der nachfolgenden Verfahrensschritte leicht verfestigt.

Zur Herstellung des opaken Hohlzylinders 12 wird der mechanisch vorverdichtete Formkörper 1 anschließend mittels eines Lichtbogens 7 von der Innenbohrung 6 des Formkörpers 1 aus zonenweise geschmolzen. Hierzu wird von einem Ende des Formkörpers 1 beginnend ein Elektrodenpaar 8 in die Innenbohrung 6 eingeführt und zum gegenüberliegenden Ende des Formkörpers 1 hin und kontinuierlich entlang der Innenwandung 9 bewegt. Die Vorschubgeschwindigkeit des Elektrodenpaares 8 wird auf 55 mm/min eingestellt. Durch diese vergleichsweise geringe Vorschubgeschwindigkeit wird erreicht, dass eine ausreichende Durchwärmung der an für sich thermisch isolierenden Schüttung (Formkörper) stattfinden und eine dichte Wandung aufgebaut werden kann. Durch die Temperatur des Lichtbogens 7 wird der Formkörper 1 verglast. An der Innenwandung des Formkörpers 1 wird eine Maximaltemperatur von über 2100°C erreicht. Dabei bildet sich im Formkörper 1 eine nach außen, in Richtung der Metallform 2 fortschreitende Verglasungsfront 10, die die Grenzfläche zwischen dem noch offenporigen Bereich 11 des Formkörpers 1 und einem bereits teilweise geschmolzenen, opaken Bereich 12 des Formkörpers 1 bildet. Die Bewegungsrichtung 13 der Verglasungsfront 10, die - durch die Vorschubgeschwindigkeit des Elektrodenpaares 8 überlagert - im wesentlichen radial von der Innenwandung 9 der Innenbohrung 6 nach außen gerichtet ist, wird in Figur 1 schematisch anhand der Richtungspfeile 14 charakterisiert. Die im SiO₂-Granulat eingeschlossenen Gase führen der zur Porenbildung im opaken Bereich 12, wodurch die gewünschte Opazität erzeugt wird.

Der Bereich der Innenwandung 9 der Innenbohrung 6 wird bei diesem Verfahren aufgrund der hohen Temperatur des Lichtbogens 7 stark verdichtet. Dadurch erhält der aus dem Formkörper 1 geschmolzene Hohlzylinder 12 eine innere Oberflächenschicht 15, die aus transparentem oder transluzentem Quarzglas hoher Dichte besteht.

Nach der Entnahme aus der Metallform 2 wird am Hohlzylinder 12 haftender Sand entfernt und der Außenmantel wird sorgfältig durch mechanisches Schleifen geglättet. Der so hergestellte Quarzglas-Hohlzylinder 12 hat im Ausführungsbeispiel einen Außendurchmesser von 190 mm und einen Innendurchmesser von 150 mm. Durch den Hohlzylinder 12 wird für das nachfolgende Ziehverfahren die opake Quarzglasmasse zur Verfügung gestellt. Aus großen, massiven Hohlzylindern können Quarzglasrohre mit großem Außendurchmesser - zum Beispiel 350 mm - bei ausreichender Wandstärke - zum Beispiel 5 - 8 mm - erhalten werden. Aus derartigen Quarzglasrohren werden vorallem Bauteile für die Herstellung von Halbleiterscheiben (Wafer) mit Durchmessern von 300 mm gefertigt.

Die Weiterverarbeitung des Hohlzylinders 12 zu einem opaken Quarzglasrohr durch Strecken und Aufblasen wird nachfolgend erläutert.

In **Figur 2** ist eine zur Durchführung eines Horizontalziehverfahrens gebräuchliche Vorrichtung dargestellt. Der im vorher beschriebenen Verfahrensschritt hergestellte Quarzglas-Hohlzylinder 12 wird mittels einer Vorschubeinrichtung 20 kontinuierlich, und um seine horizontal orientierte Längsachse rotierend, mit einer Vorschubgeschwindigkeit von 5 cm/min in Richtung des Pfeils 21 in einen Widerstands-Ofen 22 geschoben, der den Hohlzylinder 12 ringförmig umgibt. Bei einer Temperatur von ca. 2100°C wird die Viskosität des Quarzglases im Bereich des Ofens 22 soweit erniedrigt, dass der Hohlzylinder 12 zu einem Rohr 23 ausgezogen werden kann. Hierzu ist eine Zieheinrichtung 24 vorgesehen, mittels der das um seines Längsachse rotierende Rohr 23 mit einer Abziehgeschwindigkeit von 10 cm/min in Richtung des Pfeiles 25 abgezogen wird. Die freie Stirnseite des Rohres 23, das einen Außendurchmesser von 250 mm und eine Wandstärke von 5,5 mm aufweist, ist mit einem Abzugstab 26 aus Quarzglas gasdicht verschmolzen, während die gegenüberliegende, freie Stirnseite des Hohlzylinders 12 mit einer gasdichten Drehdurchführung 27 verschlossen ist. In den Ofen 22 ragt ein Formwerkzeug, das zwei wassergekühlte Formbacken 28 aufweist, die mit Graphitbacken 29, gegen die das Rohr 23 aufgeblasen wird, belegt sind. Zur Erzeugung und Aufrechterhaltung eines geregelten Innenüberdrucks im Rohr 23 und im Hohlzylinder 12 wird ein Sauerstoffstrom über die Drehdurchführung 27 in den Hohlzylinder 12 eingeleitet. Durch den Innenüberdruck wird die niedrigviskose Masse des Hohlzylinders 12 gegen die feststehenden Graphitbacken 29 auf den voreingestellten Durchmesser von 250 mm bei einer Wandstärke von 5,5,mm geblasen.

Das so erhaltene dünnwandige Rohr 23 besteht aus synthetischem, opakem Quarzglas. Es werden folgende Verunreinigungsgehalte gemessen (in Gew.-ppb): Lithium: <10, Natrium: 60, Kalium: <50, Eisen: 100. Die Transmission über die gesamte Wandstärke liegt im ultravioletten, sichtbaren und infraroten Spektralbereich unterhalb von 1% (bezogen auf die Anfangsintensität der Strahlung).

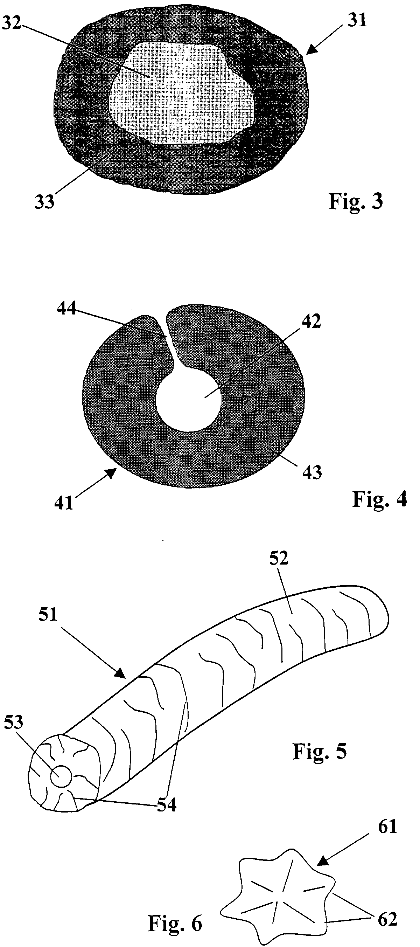

Das für die Durchführung des beschriebenen Verfahrens eingesetzte SiO₂-Granulat wird nachfolgend anhand **Figur 3** näher beschreiben. In Figur 3 ist schematisch ein einzelnes, typisches Korn 31 des eingesetzten Granulats dargestellt. Bei dem rundlichen Granulat-Korn 31 aus porösem Quarzglas ist ein zentraler Bereich 32 geringerer Dichte von einer Außenschicht 33 mit höherer Dichte umgeben. Die Dichte im zentralen Bereich beträgt etwa 40 % der Dichte von transparentem Quarzglas, in der Außenschicht beträgt sie etwa 60% davon. Die Grenzfläche zwischen zentralem Bereich 32 und Außenschicht 33 ist fließend. Der Korn-Durchmesser beträgt 420 µm, die Dicke der Außenschicht 33 etwa 100 µm.

Die Herstellung des Granulats erfolgt mittels eines üblichen Nassgranulierverfahrens unter Einsatz eines Mischers. Aus amorphen, nanoskaligen, durch Flammenhydrolyse von SiCl₄ erzeugten, pyrogenen SiO₂-Partikeln, die eine spezifische Oberfläche (nach BET) von 60 m²/g aufweisen, wird eine wässrige Suspension hergestellt, der unter fortwährendem Rühren Feuchtigkeit entzogen wird, bis diese unter Bildung einer körnigen Masse zerfällt. Nach dem Trocknen liegt die spezifische Oberfläche (nach BET) des so erhaltenen Granulats bei 50 m²/g, wobei die rundlichen Granulat-Körner Durchmesser im Bereich zwischen 160 µm und 1000 µm aufweisen. Das SiO₂-Granulat wird anschließend im Durchlauf bei einer Temperatur von ca. 1200 °C in chlorhaltiger Atmosphäre thermisch vorverdichtet. Dabei wird das Granulat gleichzeitig gereinigt, wobei die Reinigung mittels Chlor besonders effektiv ist, da die Oberfläche der SiO₂-Partikel über die Porenkanäle für das Reinigungsgas zugänglich ist und die gasförmigen Verunreinigungen leicht entfernt werden können. Der Durchsatz beträgt hierbei 10 kg/h. Dabei bildet sich in den einzelnen Granulat-Körnern ein Temperaturgradient aus, der zu den unterschiedlichen Dichten von zentralem Bereich 32 und Außenschicht 33 führt.

Das nach dieser Vorbehandlung erhaltene SiO₂-Granulat zeichnet sich durch eine spezifische BET-Oberfläche von 34 m²/g und eine Stampfdichte von 1,1 g/cm³ aus. Der mittlere Korndurchmesser liegt bei etwa 420 µm, wobei darauf geachtet wird, dass ein Feinanteil mit einem Durchmesser unterhalb von 100 µm - der hier jedoch herstellungsbedingt nicht vorliegt - vor dem Einsatz zur Herstellung von opakem Quarzglas entfernt wird. Der Gesamtgehalt der Verunreinigungen an Li, Na, K, Mg, Ca, Fe, Cu, Cr, Mn, Ti, und Zr beträgt weniger als 200 Gew.-ppb.

Das so hergestellte Granulat aus amorphen, nanoskaligen SiO₂-Partikeln kann - wie anhand den Figuren 1 und 2 beschrieben - zur Herstellung von opakem Quarzglas eingesetzt werden. Aufgrund dessen, dass die einzelnen Granulat-Körner durch Zusammenlagerung einer Vielzahl von Primärteilchen gebildet sind, die eine sehr geringe Teilchengröße haben, wird beim Verglasen eine entsprechend feine und homogene Porenverteilung ermöglicht, wie dies weiter oben näher beschreiben ist.

In **Figur 4** ist schematisch ein einzelnes Sprühkorn 41 dargestellt. Dieses ist typisch für ein Sprühgranulat, das für die Durchführung des oben anhand den Figuren 1 und 2 beispielhaft beschriebenen Verfahrens ebenfalls geeignet ist. Das typische Sprühkorn 41 liegt als Agglomerat von SiO₂-Primärteilchen vor. Es weist einen Hohlraum 42 auf, der einer Außenschicht 43 umgeben ist. Auf der Außenschicht 43 ist ein Einzugstrichter ausgebildet, der in einem engen Kanal 44 in den Hohlraum 42 mündet. Der Außendurchmesser des Sprühkorns 41 beträgt etwa 300 µm und die Dicke der Außenschicht 43 etwa 100 µm.

Im folgenden wird die Herstellung dieses Sprühgranulats näher beschrieben:

Hochreine, pyrogene, nanoskalige SiO₂-Primärteilchen mit einer spezifischen Oberfläche (nach BET) von 60 m²/g werden in deionisiertem Wasser dispergiert. Es werden 12 Gew.-ppm Aluminium in Form von pyrogenem Al₂O₃ hinzugegeben. Die Suspension wird dabei auf ein Litergewicht von 1380 g/l eingestellt. Die Schlickerviskosität beträgt 450 mPas. Unter Einsatz eines handelsüblichen Sprühtrockners (Firma Dorst, Typ D400) wird die Suspension bei einer Heißlufttemperatur von 380 °C und einem Schlickerdruck von 10,5 bar versprüht. Dabei wird ein Sprühgranulat mit einem mittleren Korndurchmesser von 330 µm und einer Restfeuchte von 0,3% erhalten. Die spezifische Oberfläche (nach BET) beträgt 54 m²/g und das Schüttgewicht liegt bei 0,6 g/cm³. Das Granulat wird anschließend bei 1200 °C im Durchlauf mit einem Durchsatz von 6,1 kg/h in einem HCl/Cl₂-Gasgemisch gereinigt und thermisch verfestigt.

Die spezifische BET-Oberfläche beträgt nach dieser Behandlung 20 m²/g, die Schüttdichte 0,8 g/cm³ und die Stampfdichte 0,92 g/cm³. Der Feinanteil mit einem Durchmesser unterhalb von 100 µm wird hier herstellungsbedingt bereits bei der Sprühgranulation mittels eines Zyklons abgetrennt. Der Gesamtgehalt der Verunreinigungen an Li, Na, K, Mg, Ca, Fe, Cu, Cr, Mn, Ti und Zr beträgt weniger als 500 Gew.-ppb.

Das so hergestellte Sprühgranulat aus amorphen, nanoskaligen SiO₂-Partikeln kann wie anhand den Figuren 1 und 2 beschrieben, zur Herstellung von opakem Quarzglas eingesetzt werden. Aufgrund dessen, dass die einzelnen Sprühkörner durch Zusammenlagerung einer Vielzahl von Primärteilchen gebildet sind, die eine sehr geringe Teilchengröße haben, wird beim Verglasen eine entsprechend feine und homogene Porenverteilung ermöglicht. Dies wird noch dadurch erleichtert, dass durch den Hohlraum 42 ein zusätzlicher, nahezu abgeschlossener Gasraum gebildet wird, der beim Verglasen zumindest teilweise erhalten bleibt, weil das eingeschlossene Gas während des Verglasens nur zum Teil entweichen kann und so zu Porenbildung und Opazität des Quarzglases beiträgt.

In **Figur 5** ist schematisch ein einzelnes Korn 51 eines Granulats dargestellt, das in Form eines Extrudats vorliegt. Ein Extrudat ist für die Durchführung des oben anhand den Figuren 1 und 2 beispielhaft beschriebenen Verfahrens ebenfalls geeignet. Das typische Korn 51 liegt als ebenfalls Agglomerat von SiO₂-Primärteilchen vor. Es weist einen längliche Außenmantel 52 auf, durch den ein Porenkanal 53 verläuft. Die Oberfläche des Außenmantels 52 weist durch eine Vielzahl tiefer Furchen 54 eine zerklüftete Struktur auf. Die Dicke (Außendurchmesser) des Korns 51 liegt im Bereich zwischen 0,2 und 1 mm, die Länge beträgt ein Mehrfaches davon.

Das Extrudat wird durch bekannte Extrusionsverfahren hergestellt, wobei eine zähflüssige Masse aus hochreinen, pyrogenen, nanoskaligen SiO₂-Primärteilchen mit einer spezifischen Oberfläche (nach BET) von 400 m²/g und deionisiertem Wasser in einen Extruder gegeben und durch eine Matrize, beispielsweise in Form eines Siebes, gepresst wird. Die einzelnen Öffnungen der Matrize sind üblicherweise als Bohrungen mit rundem Querschnitt ausgebildet; es ist aber auch ein sternförmiger oder polygonaler Bohrungsquerschnitt geeignet, so dass Extrudate mit einem strukturierten Oberflächenprofil entstehen, wie bei dem in **Figur 6** gezeigten Extrudat 61. Bei diesem Ausführungsbeispiel trägt die besonders tief zerklüftete, strukturierte Oberfläche 62 der einzelnen Granulat-Körner zur Erzeugung der gewünschten Opazität des daraus erschmolzenen Quarzglases wesentlich bei. Aufgrund der zusätzlichen _{"}Gasfallen" (innerer Porenkanal 53 bzw. stark strukturierte Oberfläche 62) reicht bei den gezeigten Extrudaten 51, 61 eine vergleichsweise geringe spezifische BET-Oberfläche von etwa 3 m²/g zur Erzeugung der Porosität aus.

Das poröse Extrudat wird anschließend bei 1250 °C gereinigt und gesintert, wobei die spezifische BET-Oberfläche durch diese Behandlung auf etwa 3 m²/g, und die Stampfdichte auf 0,95 g/cm³ eingestellt wird. Der Gesamtgehalt der Verunreinigungen an Li, Na, K, Mg, Ca, Fe, Cu, Cr, Mn, Ti und Zr beträgt weniger als 400 Gew.-ppb.

Das so hergestellte Extrudat gemäß den Figuren 5 und 6 aus amorphen, nanoskaligen SiO₂-Partikeln kann wie anhand den Figuren 1 und 2 beschrieben, zur Herstellung von opakem Quarzglas eingesetzt werden. Die BET-Oberfläche dieses Granulats ist zwar vergleichsweise gering, jedoch trägt die strukturierte, Vertiefungen aufweisende Oberfläche der einzelnen Körner 51 dazu bei, dass beim Verglasen (Erschmelzen) des Hohlzylinders 12 (Figur 1) Gas zwischen den einzelnen Körners eingeschlossen wird, so dass die gewünschte Opazität erhalten wird. Dies wird noch durch den Porenkanal 53 erleichtert, der einen zusätzlichen, nahezu abgeschlossenen Gasraum bildet, der beim Verglasen zumindest teilweise erhalten bleibt.

## Patentansprüche

1. Verfahren für die Herstellung eines Bauteils aus opakem, synthetischen Quarzglas, das folgende Verfahrensschritte umfasst
(a) Bereitstellen eines Ausgangsmaterials in Form eines Granulats (31; 41; 51; 61) aus synthetischem, hochreinem SiO₂, das aus mindestens teilweise porösen Agglomeraten von SiO₂-Primärteilchen gebildet ist und das eine Stampfdichte von mindestens 0,8 g/cm³ aufweist,
(b) Einbringen des Granulats (31; 41; 51; 61) in eine Form (2) und Erschmelzen einer Vorform (12) aus opakem Quarzglas,
(c) Umformen der Vorform (12) in einem Heißumformprozess unter Bildung des Bauteils (23) aus opakem Quarzglas.

2. Verfahren nach Anspruch 1, **dadurch gekennzeichnet, dass** die Außenoberfläche der Vorform (12) nach deren Entnahme aus der Form (2) mechanisch bearbeitet und die Vorform (12) anschließend einer Erhitzungszone (22) zugeführt wird, in welcher sie von einem Ende beginnend zonenweise erweicht und dabei durch Strecken und Aufblasen zu dem Bauteil (23) umgeformt wird.

3. Verfahren nach Anspruch 1 oder 2, **dadurch gekennzeichnet, dass** SiO₂-Granulat (31; 41; 51; 61) mit einer Stampfdichte im Bereich zwischen 0,9 g/cm³ und 1,4 g/cm³ eingesetzt wird.

4. Verfahren nach einem der vorhergehenden Ansprüche, **dadurch gekennzeichnet, dass** SiO₂-Granulat (31; 41; 51; 61) mit einer spezifischen Oberfläche (nach BET) im Bereich zwischen 1,0 m²/g und 40 m²/g, vorzugsweise mit einer spezifischen Oberfläche im Bereich zwischen 10 und 30 m²/g eingesetzt wird.

5. Verfahren nach einem der vorhergehenden Ansprüche, **dadurch gekennzeichnet, dass** die SiO₂-Primärteilchen eine mittlere Teilchengröße im Bereich von 0,5 µm bis 5 µm oder eine mittlere Teilchengröße unterhalb von 0,2 µm aufweisen.

6. Verfahren nach einem der vorhergehenden Ansprüche, **dadurch gekennzeichnet, dass** ein Granulat (31; 41) mit inhomogener radialer Dichteverteilung eingesetzt wird, derart dass bei dem Agglomerat ein Innenbereich (32; 42) geringerer Dichte mindestens teilweise von einem Außenbereich (33; 43) höherer Dichte umschlossen ist.

7. Verfahren nach einem der vorhergehenden Ansprüche, **dadurch gekennzeichnet, dass** das Granulat (31; 41; 51; 61) ein Aufbaugranulat, ein Sprühgranulat oder ein Extrudat ist.

8. Verfahren nach einem der vorhergehenden Ansprüche, **dadurch gekennzeichnet, dass** die Agglomerate eine mit Vertiefungen (54; 62) versehene Außenoberfläche aufweisen.

9. Verfahren nach einem der vorhergehenden Ansprüche, **dadurch gekennzeichnet, dass** ein Granulat (31; 41; 51; 61) bereitgestellt wird, bei dem die Agglomerate durch thermische Behandlung bei einer Temperatur im Bereich von 800 °C bis 1350 °C vorverdichtet sind.

10. Verfahren nach einem der vorhergehenden Ansprüche, **dadurch gekennzeichnet, dass** ein SiO₂-Granulat (31; 41; 51; 61) aus Körnern mit einer mittleren Korngröße im Bereich von 100 µm bis 4000 µm hergestellt wird.

11. Verfahren nach einem der vorhergehenden Ansprüche, **dadurch gekennzeichnet, dass** ein SiO₂-Granulat (31; 41; 51; 61) hergestellt wird, das zwischen 5 Gew.-ppm und 20 Gew.-ppm Aluminiumoxid enthält.

12. Verfahren nach einem der vorhergehenden Ansprüche, **dadurch gekennzeichnet, dass** das Erschmelzen der Vorform (12) aus opakem Quarzglas mittels eines Lichtbogens (7) erfolgt, wobei eine Verglasungsfront (10) von einer Innenoberfläche (9) der Vorform (12) nach außen fortschreitet.

13. Verfahren nach Anspruch 12, **dadurch gekennzeichnet, dass** die Vorform (12) unter Rotation um eine Rotationsachse (3) von der Innenoberfläche (9) aus mittels des Lichtbogens (7) zonenweise auf eine Verglasungstemperatur oberhalb von 1900 °C erhitzt wird.

14. Verfahren nach einem der Ansprüche 2 bis 13, **dadurch gekennzeichnet, dass** die Vorform (12) in einem Horizontalziehverfahren zu einem opaken Quarzglasrohr (23) umgeformt wird

15. Verfahren nach einem der Ansprüche 2 bis 13, **dadurch gekennzeichnet, dass** die Vorform in einem Vertikalziehverfahren zu einem opaken Quarzglasrohr umgeformt wird.

16. Opakes Quarzglasrohr, hergestellt nach einem Verfahren nach einem der Ansprüche 1 bis 15, **dadurch gekennzeichnet, dass** es aus synthetischem SiO₂ mit einem Lithium-Gehalt von maximal 100 Gew.-ppb besteht, und dass es eine Wandstärke im Bereich von 0,5 mm bis 15 mm aufweist.

17. Quarzglasrohr nach Anspruch 16, **dadurch gekennzeichnet, dass** es einen Natrium-Gehalt von maximal 200 Gew.-ppb und einen Kalium-Gehalt von maximal 200 Gew.-ppb aufweist.

18. Quarzglasrohr nach Anspruch 16 oder 17 zur Verwendung bei der Halbleiterherstellung und in Heißprozessen, **dadurch gekennzeichnet, dass** es eine Wandstärke im Bereich von 4 bis 8 mm aufweist.

19. Quarzglasrohr nach einem der Ansprüche 16 bis 18, **dadurch gekennzeichnet, dass** es mit einer Stabilisierungsschicht versehen ist.
